# EUROPÄISCHE PATENTANMELDUNG

(11) **EP 0 645 182 A1**
(43) Veröffentlichungstag der Anmeldung: **29.03.1995**
(21) Anmeldenummer: 94112475.2
(22) Anmeldetag: 10.08.1994
(51) Int. Cl.: B01J 23/74, B01J 23/88, C10G 45/08

(54) **Verwendung von Nickel oder einer Nickelmolybdänlegierung als Katalysator für die Hydroraffination**

(30) Priorität: 24.09.1993 DE 4332473
(71) Anmelder: Krupp VDM GmbH, D-58791 Werdohl (DE)
(72) Erfinder: Herda, Wilfried R., D-40489 Düsseldorf (DE); Koppe, Jürgen, Dr., D-06258 Schkopau (DE)
(74) Vertreter: Cohausz & Florack

(57) **Zusammenfassung**

Die Erfindung betrifft die Verwendung von Nickel oder einer Nickelmolybdänverbindung, die neben Molybdän mehr als 30 % Nickel enthält, und für eine Zeit von 0,25 bis 10 h bei Temperaturen von 400 bis 1200°C in Luftatmosphäre thermisch behandelt und danach einer Wasserstoffaktivierung im Temperaturbereich von 200 bis 600°C unterworfen ist, wobei gegebenenfalls vor der thermischen Behandlung eine Behandlung mit einer Mineralsäure, vorzugsweise mit Salpetersäure, bei Temperaturen von 0 bis 100°C erfolgt ist, als Katalysator für die Hydroraffination von Kohlenwasserstoffgemischen, die Heteroatome wie Stickstoff, Sauerstoff, Schwefel und/oder Halogene enthalten.

## Beschreibung

Die Erfindung betrifft die Verwendung von Nickel oder einer Nickelmolybdänlegierung als Katalysator für die Hydroraffination.

Es ist bekannt, die Hydroraffination in Gegenwart von Katalysatoren durchzuführen, die 2 bis 30 % Ni und 10 bis 30 % MoO₃, geträgert auf Al₂O₃, enthalten (K. Becker und H. Spindler: Dissertation (Dr.sc.nat.) Halle 1984, S. 171 bis 184). Probleme bei der Herstellung bestehen insbesondere in der gezielten Herstellung des sauren Al₂O₃-Trägers, der nach dem Stand der Technik eine unbedingte Voraussetzung für aktive Hydroraffinationskatalysatoren ist. So heißt es z.B. auf S. 174 der Arbeit von Becker und Spindler: "Mit der Verringerung des Arbeitsdruckes mußte zur Sicherung des Hydroraffinationsgrades die Acidität des Katalysators erhöht werden." Eine erhöhte Acidität des Katalysators kann aber bekanntlich zugleich Nebenreaktionen, wie die Isomerisierung, begünstigen.

Weiterhin bereitet es Schwierigkeiten, verbrauchte Hydroraffinationskatalysatoren aufgrund der vielschichtigen Zusammensetzung zu entsorgen.

Der Erfindung liegt nun die Aufgabe zugrunde, Mittel für eine einfache katalytische Hydroraffination zu schaffen, die leichte Entsorgung ermöglichen und keine unerwünschten Nebenreaktionen verursachen.

Diese Aufgabe wird erfindungsgemäß gelöst durch die Verwendung von Nickel oder einer Nickelmolybdänlegierung, die neben Molybdän mehr als 30% Nickel enthält, und für eine Zeit von 0,25 bis 10 h bei Temperaturen von 400 bis 1200°C in Luftatmosphäre thermisch behandelt und danach einer Wasserstoffaktivierung im Temperaturbereich von 200 bis 600°C unterworfen ist, wobei gegebenenfalls vor der thermischen Behandlung eine Behandlung mit einer Mineralsäure, vorzugsweise mit Salpetersäure, bei Temperaturen von 0 bis 100°C erfolgt ist, als Katalysator für die Hydroraffination von Kohlenwasserstoffgemischen, die Heteroatome wie Stickstoff, Sauerstoff, Schwefel und/oder Halogene enthalten.

Die erfindungsgemäß zu verwendende Nickelmolybdänlegierung kann Zusätze anderer Metalle, wie Eisen, Chrom, Titan, Aluminium, enthalten, die selber nicht katalytisch wirksam sind, jedoch die katalytische Wirksamkeit der Nickelmolybdänphase nicht beeinträchtigen.

Der Katalysator kann in Blechform oder in jeder anderen Form mit hinreichend großer spezifischer Oberfläche eingesetzt werden. Er bewirkt keine unerwünschten Nebenreaktionen und ist resistent gegen die bei der Hydroraffination frei werdenden Substanzen wie H₂S, NH₃, H₂O, HCL usw..

Obwohl der Katalysator nach der erfindungsgemäß vorgesehenen Behandlung über keine sauren Zentren mehr verfügt, zeigt er überraschenderweise eine hinreichend hohe Hydroraffinationsaktivität.

Die Erfindung wird durch nachfolgende Beispiele näher erläutert. Alle %-Angaben sind Masse-%, es sei denn, es ist etwas anderes angegeben.

### Beispiele

In einen Strömungsrohrreaktor wurden jeweils 2,0 g Katalysator gegeben. Die Austestung erfolgte bei einer Temperatur von 250 °C und einem Druck von 2 bar unter folgenden Belastungen:
5 l/h H₂ mit jeweils 5 Vol.-% einer der nachfolgend genannten Verbindungen strömten über den Katalysator, wobei folgende Ergebnisse erhalten wurden:

| Katalysator | Verbindung | Umsatz (%) |
|---|---|---|
| Nickel Draht mit einem Durchmesser von 1mm, 10' lang bei 25°C mit konz. HNO₃ vorbehandelt, 1h lang bei 600°C calciniert und dann 1h bei 450°C im H₂-Strom aktiviert | Chlorbenzol | 85% |
| | Thioglykolsäure | 75% |
| | Thiophen | 70% |
| Nickelschwamm mit einer Oberfläche von 0,05m²/g, 1h lang bei 950°C calciniert und dann 1h lang bei 450°C im H₂-Strom aktiviert | Thioglykolsäure | 85% |
| | Thiophen | 75% |
| Nickelmolybdänlegierung mit 69 % Nickel, 28 % Molybdän, Rest: Eisen, Draht mit einem Durchmesser von 1mm, 15' lang bei 35°C mit konz. HNO₃ vorbehandelt, 1h lang bei 700°C calciniert und dann 1h lang bei 450°C im H₂-Strom aktiviert | Dichlorpropan | 72% |
| | Thioglykolsäure | 65% |
| | Thiophen | 60% |
| 5 % Nickel und 10 % MoO₃ auf Al₂O₃ (Stand der Technik) | Chlorbenzen | 15% |
| | Thioglykolsäure | Zersetzung |
| 0,5 % Pt auf Al₂O₃ (Stand der Technik) | Chlorbenzen | 35% |

Im Gegensatz zu den erfindungsgemäßen Katalysatoren zeigen die herkömmlichen Katalysatoren insbesondere in den Hydrodehalogenierrekationen einen zum Teil starken Abfall im Umsatz. Weiterhin werden solche Verbindungen wie die Thioglykolsäure völlig zersetzt, was zu unerwünschten Ablagerungen auf dem Katalysator führt.

Die Aktivität der erfindungsgemäßen Katalysatoren ist stark von der spezifischen Oberfläche abhängig wie der Vergleich der Umsätze der Drähte mit den Schwammkörpern zeigt.

## Patentansprüche

1. Verwendung von Nickel oder einer Nickelmolybdänlegierung, die neben Molybdän mehr als 30% Nickel enthält, und für eine Zeit von 0,25 bis 10 h bei Temperaturen von 400 bis 1200°C in Luftatmosphäre thermisch behandelt und danach einer Wasserstoffaktivierung im Temperaturbereich von 200 bis 600°C unterworfen ist, wobei gegebenenfalls vor der thermischen Behandlung eine Behandlung mit einer Mineralsäure, vorzugsweise mit Salpetersäure, bei Temperaturen von 0 bis 100°C erfolgt ist, als Katalysator für die Hydroraffination von Kohlenwasserstoffgemischen, die Heteroatome wie Stickstoff, Sauerstoff, Schwefel und/oder Halogene enthalten.

2. Verwendung des Katalysators nach Anspruch 1, der zusätzlich mindestens eines der Metalle Eisen, Chrom, Titan, Aluminium enthält, für den Zweck nach Anspruch 1.
